# EUROPEAN PATENT SPECIFICATION

(11) **EP 3 842 693 B1**
(45) Date of publication and mention of the grant of the patent: **28.02.2024**
(21) Application number: 19852391.2
(22) Date of filing: 20.08.2019
(51) Int. Cl.: F23G 5/50

(54) **INFORMATION PROCESSING DEVICE, INFORMATION PROCESSING PROGRAM, AND INFORMATION PROCESSING METHOD**
INFORMATIONSVERARBEITUNGSVORRICHTUNG, INFORMATIONSVERARBEITUNGSPROGRAMM UND INFORMATIONSVERARBEITUNGSVERFAHREN
DISPOSITIF, PROGRAMME ET PROCÉDÉ DE TRAITEMENT D'INFORMATIONS

(30) Priority: 23.08.2018 JP 2018155959; 31.01.2019 JP 2019015808
(43) Date of publication of application: 30.06.2021
(73) Proprietor: Ebara Environmental Plant Co., Ltd., Tokyo 144-0042 (JP)
(72) Inventor: YOKOYAMA, Akiko, Tokyo 144-0042 (JP); KAWACHI, Takahiro, Tokyo 144-0042 (JP); TOMARU, Haruyuki, Tokyo 144-0042 (JP); UMEZAWA, Toshiyuki, Tokyo 144-0042 (JP); MACHIDA, Junya, Tokyo 144-0042 (JP); YANAGIHARA, Takashi, Tokyo 144-0042 (JP); KOMATSU, Takayoshi, Tokyo 144-0042 (JP); SASADA, Keisuke, Tokyo 144-0042 (JP); ABE, Taishi, Tokyo 144-0042 (JP); MOTOI, Shigetaka, Tokyo 144-0042 (JP); ICHIKI, Kazuki, Tokyo 144-0042 (JP)
(74) Representative: Klang, Alexander H.
(86) International application number: PCT/JP2019/032360
(87) International publication number: WO 2020/040110

(56) References cited:
- EP-A1- 1 048 900
- EP-A1- 3 660 397
- JP-A- H 109 538
- JP-A- 2007 126 246
- JP-A- 2011 027 349
- JP-A- 2017 109 161
- JP-A- 2017 109 161

## Description

### Technical Field

The present invention relates to an information processing device, an information processing program, and an information processing method for identifying types of waste material.

### Background Art

In the related art, in a waste treatment plant, various types of waste material different in quality such as household waste, shredded oversized waste, pruned branches, and sludge are fed into a waste pit. These various types of waste material is accumulated in the waste pit and then fed into an incinerator together for treatment in the incinerator. The quality of the waste material fed into the incinerator is determined on the basis of the proportion of various types of waste material contained in the waste material, which affects combustion. In order to stabilize combustion, the waste material is agitated by a crane in the waste pit to homogenize the quality of the waste material.

However, when the waste material fed into the incinerator contains a certain amount or more of waste material such as shredded oversized waste and sludge, the internal temperature of the incinerator may change suddenly, and harmful gases or substances such as dioxins may be generated to adversely affect the surrounding environment. Further, in addition to the waste material which affects a combustion state, there is also waste material that causes troubles in each device in the waste treatment plant. For example, when a large amount of pruned branches or the like is contained in the waste material fed into the incinerator, the pruned branches or the like causes clogging in the hopper through which the waste material is fed into the incinerator.

On the other hand, waste material such as general waste is basically fed into the waste pit in a state of being in a bag, and agitated by a crane. However, a lower degree of bag breakage, that is, a situation where the degree of tearing of the waste bag is small, and a large amount of waste material remains in the waste bag, may affect the combustion state. That is to say, the state of waste bag also contributes to the stability of combustion, which is known empirically.

In this regard, for example, JP 2007-126246 A discloses a method of operating an automatic crane with a control device for an automatic crane for a waste treatment plant. In the method, the general waste and foreign waste fed into the waste pit are identified by color tone, and the crane is controlled on the basis of the identification result, thereby homogenizing the quality of waste material.

JP 2015-124955 A discloses a waste agitating state detection device and a waste agitating state detection method in which the agitating state of waste, that is, the degree of tearing of the waste bag is detected on the basis of the brightness value of a captured image.

WO 2019 026551 A discloses A device includes: a training data generation unit that generates training data associated with an image taken of waste stored in the refuse pit; a model construction unit that constructs a model according to learning using the training data; and an estimation unit that inputs data for a new image taken of the waste stored in the refuse pit into the model and acquires a value indicating the composition of the waste corresponding to the new image.

JP 2011 027349 A discloses a treatment system and treatment method for combustion target supplied to combustion furnace and combustion control system for the combustion furnace using the treatment system and the treatment method

### Summary of Invention

However, in the method of operating the automatic crane with the control device of an automatic crane for a waste treatment plant in JP 2007-126246 A, general waste and foreign waste are distinguished by color tone. However, it is difficult to identify the type of the waste material simply by color tone, and for example, even when some shredded oversized waste is mixed, the waste may be determined as general waste as a whole. Therefore, there is a risk that a certain amount or more of foreign waste material which affects the combustion state or a certain amount or more of waste material which causes troubles of each device are fed into the incinerator.

In the waste agitating state detection device and the waste agitating state detection method of JP 2015-124955 A, the degree of tearing of the waste bag is detected on the basis of a brightness value. However, this method can only detect the waste bag. In some cases, in addition to the waste bag, various types of waste material such as pruned branches and futons are fed into the actual waste pit, and thus it is difficult to apply the above method to such an actual waste pit.

It is desired to provide an information processing device, an information processing program, and an information processing method capable of identifying the type of waste material in the waste pit.

In accordance with an aspect of the present invention, an information processing device as set forth in the appended claim 1 is provided.

In accordance with a further aspect of the present invention, an information processing program as set forth in appended claim 12 is provided.

In accordance with a further aspect of the present invention, an information processing method as set forth in appended claim 13 is provided.

### Brief Description of Drawings

Fig. 1 is a schematic diagram illustrating a configuration of a waste treatment plant according to an embodiment.
Fig. 2 is a block diagram illustrating a configuration of an information processing device according to the embodiment.
Fig. 3 is a flowchart illustrating an example of an information processing method by the information processing device according to the embodiment.
Fig. 4 is a diagram illustrating an example of image data obtained by capturing an inside of a waste pit.
Fig. 5 is a diagram illustrating an example of training data in which types of waste material and identification targets other than waste material are labeled on the image data obtained by capturing the inside of the waste pit.
Fig. 6 is a diagram illustrating an example of data in which an identification result by a type identification unit is displayed to be superimposed on the image data obtained by capturing the inside of the waste pit.
Fig. 7 is a map in which a ratio of types of waste material in the waste pit is displayed for each area.

### Description of Embodiments

According to an embodiment of the invention, the type of the waste material accumulated in the waste pit is identified by using the learned identification algorithm generated by machine learning when the image data obtained by capturing the inside of the waste pit is given as an input, and thus, it is possible to identify the waste material which affects the combustion state when a certain amount or more is fed and the waste material which causes troubles of each device. Accordingly, it is possible to prevent a certain amount or more of erroneous feeding of such special waste material and to perform stable treatment without affecting the combustion state and each device.

As a result of actual verification by the inventors of the present invention, it is confirmed that the identification accuracy of waste material can be remarkably improved by such aspects. According to the examination by the inventors of the present invention, it is considered that the type identification unit can be prevented from identifying the identification target other than waste material as a certain type of waste material with hesitating to determine; for example, identifying the side wall of the waste pit as sludge with hesitating to determine.

Specific examples of the embodiments will be described in detail below with reference to the accompanying drawings. Incidentally, in the following description and the drawings used in the following description, the same reference numerals are used for the part which can be configured identically, and duplicate description is omitted.

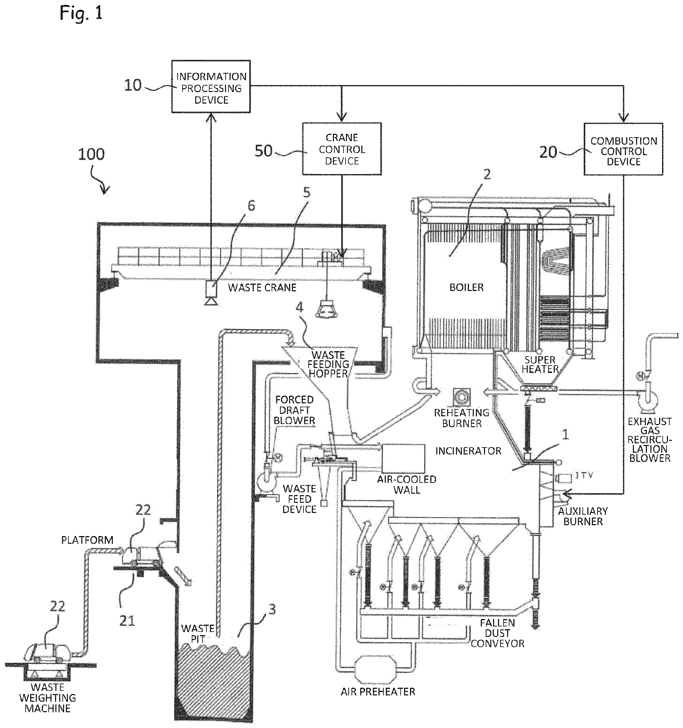

Fig. 1 is a schematic view illustrating a configuration of a waste treatment plant 100 according to the embodiment.

As illustrated in Fig. 1, the waste treatment plant 100 includes a platform 21 in which a transport vehicle (waste collection vehicle) 22 for loading waste material stops, a waste pit 3 where the waste material fed from the platform 21 is accumulated, a crane 5 which agitates and transports the waste material accumulated in the waste pit 3, a hopper 4 which the waste material transported by the crane 5 is fed, an incinerator 1 that incinerates the waste material fed from the hopper 4, and an exhaust heat boiler 2 which recovers exhaust heat from the exhaust gas generated in the incinerator 1. The type of incinerator 1 is not limited to a grate furnace as illustrated in Fig. 1, but also includes a fluidized furnace (also referred to as a fluidized-bed furnace). Further, the structure of the waste pit 3 is not limited to the one-stage pit as illustrated in Fig. 1, but also includes a two-stage pit. Further, the waste treatment plant 100 is provided with a crane control device 50 for controlling the operation of the crane 5 and a combustion control device 20 for controlling the combustion of waste material in the incinerator 1.

The waste material carried in while being loaded on the transport vehicle 22 is fed into the waste pit 3 from the platform 21 and accumulated in the waste pit 3. The waste material accumulated in the waste pit 3 is agitated by the crane 5 and transported to the hopper 4 by the crane 5, and is fed into the incinerator 1 via the hopper 4, and is treated by being incinerated inside the incinerator 1.

As illustrated in Fig. 1, the waste treatment plant 100 is provided with an imaging device 6 for capturing an inside of the waste pit 3 and an information processing device 10 for identifying the type of waste material in the waste pit 3.

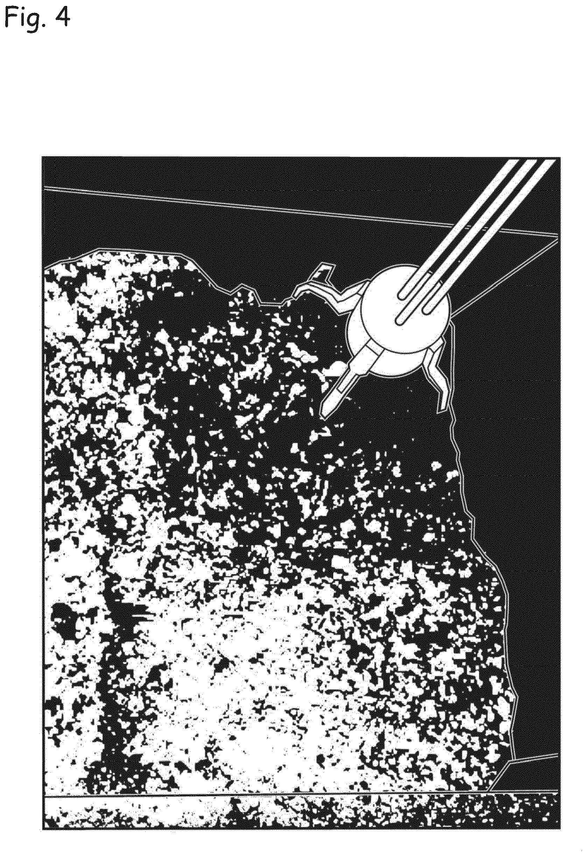

The imaging device 6 is arranged above the waste pit 3 and is fixed to the rail of the crane 5 in the illustrated example, and the waste material accumulated in the waste pit 3 can be captured from above the waste pit 3. Fig. 4 is a diagram illustrating an example of image data obtained by capturing an inside of the waste pit 3 with the imaging device 6.

The imaging device 6 may be an RGB camera which outputs the shape/color image data of the waste material as an imaging result, a near-infrared camera which outputs the near-infrared image data of the waste material as an imaging result, a 3D camera or an RGB-D camera which captures three-dimensional image data of the waste material as an imaging result, or a combination of two or more of these.

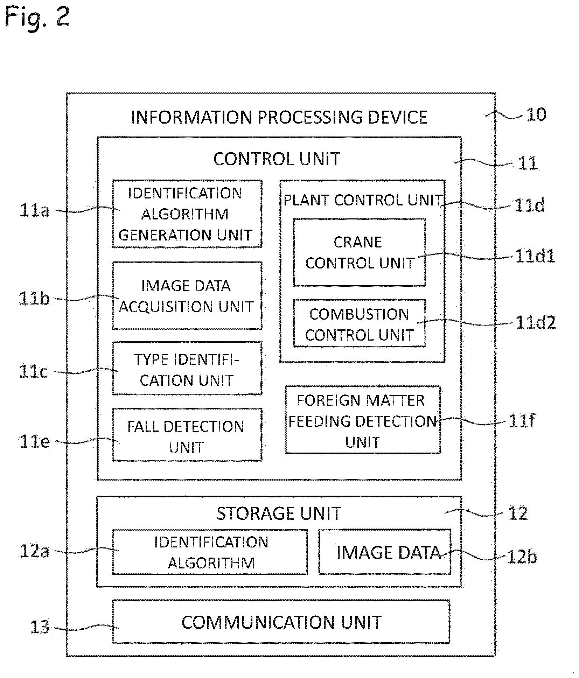

Next, the configuration of the information processing device 10 for identifying the type of waste material in the waste pit 3 will be described. Fig. 2 is a block diagram illustrating the configuration of the information processing device 10. Incidentally, at least a part of the information processing device 10 is realized by a computer.

As illustrated in Fig. 2, the information processing device 10 has a control unit 11, a storage unit 12, and a communication unit 13. Each unit is communicably connected to each other via a bus.

Among these units, the communication unit 13 is a communication interface among the imaging device 6, each device of the crane control device 50 and the combustion control device 20, and the information processing device 10. The communication unit 13 transmits/receives information among the imaging device 6, each device of the crane control device 50 and the combustion control device 20, and the information processing device 10.

The storage unit 12 is a fixed data storage such as a hard disk. Various kinds of data handled by the control unit 11 are stored in the storage unit 12. Further, the storage unit 12 stores an identification algorithm 12a generated by an identification algorithm generation unit 11a described later and image data 12b acquired by an image data acquisition unit 11b described later.

The control unit 11 is a control unit for performing various processes of the information processing device 10. As illustrated in Fig. 2, the control unit 11 has the identification algorithm generation unit 11a, the image data acquisition unit 11b, a type identification unit 11c, a plant control unit 11d, a fall detection unit 11e, and a foreign matter feeding detection unit 11f. Each of these parts may be realized when a processor in the information processing device 10 executes a predetermined program or may be implemented by hardware.

The identification algorithm generation unit 11a is configured to learn the training data in which the type of waste material is labeled on the past image data obtained by capturing the inside of the waste pit where the waste material is accumulated, and generate the learned identification algorithm 12a which identifies the type of waste material when new image data of the inside of the waste pit is given as an input.

The identification algorithm generation unit 11a may be configured to learn the training data in which the type of waste material is labeled and an identification target other than the waste material is labeled by types on the past image data of the inside of the waste pit, and generate the learned identification algorithm 12a which identifies the type of an identification target other than waste material in addition to the type of waste material when past image data of the inside of the waste pit is given as an input.

For example, the identification algorithm 12a specifically includes one or more of statistical estimation, reinforcement learning and deep learning using linear regression, Boltzmann machine, neural network, support vector machine, Bayesian network, sparse regression, decision tree or random forest.

For example, the training data is created by the skilled operator who operates the waste treatment plant 100, by visually identifying waste material and identification targets other than waste material with respect to the image data obtained by capturing the inside of the waste pit 3 and performs labeling by types. The types of waste material and identification targets other than waste material are labeled, for example, in a state of being superimposed on the image data as layers by types.

The types of waste material labeled in the training data may include one or more of unbroken waste bags, paper waste, pruned branches, futons, sludge, shredded oversized waste, cardboards, hemp bags, paper bags, bottom waste (the waste that exists near the bottom in the waste pit 3, is compressed by the upper waste material, and has a high water content). Further, the types of waste material labeled in the training data may include unexpected waste material (foreign matter) which is not desired to be fed into the waste pit 3 but is likely to be fed. Here, examples of foreign matters include those that should not be incinerated, specifically, fluorescent lamps, mercury-containing waste, cylinders, cans, and explosives such as oil tanks. Further, the types of waste material labeled in the training data may include one or more of wood waste, textile waste, clothing waste, plastic waste, animal residue, animal corpse, kitchen waste, vegetation, soil, medical waste, incineration ash, bicycles, chests, beds, shelves, desks, chairs, agricultural vinyl, PET bottles, styrene foams, meat and bone meal, agricultural products, pottery, glass scrap, metal scrap, debris, concrete scrap, tatami mat, bamboo, straw, and activated carbon.

The types of identification targets other than waste material labeled in the training data may include one or more of the beams of the waste treatment plant 100, the side walls of the waste pit 3, the mountain cliffs of the waste material accumulated in the waste pit 3 (the part of the mountain cliff which is dark to such an extent that the type of waste material is visually unidentifiable), and the crane 5 for agitating or transporting the waste material. Further, the types of the identification targets other than waste material labeled in the training data may include one or both of the worker and the carry-in vehicle. Further, the types of the identification target other than waste material labeled in the training data may include one or more of the walls, pillars, floor, windows, ceilings, doors, stairs, and girders (a structure that moves with suspending the crane 5), corridors, waste pit dividers, waste feeding hoppers, and loading doors of the waste treatment plant 100, workers, and carry-in vehicles.

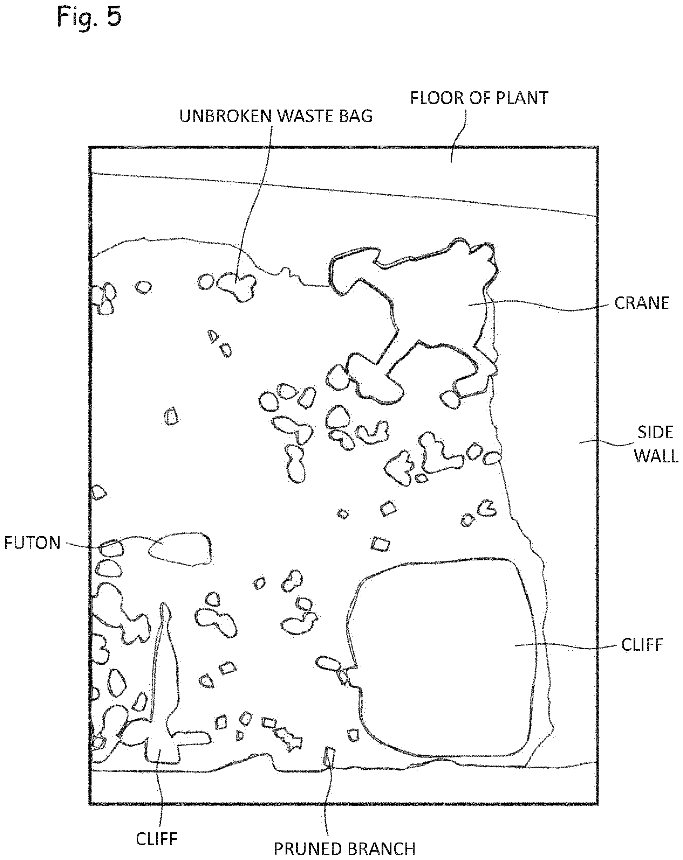

Fig. 5 is a diagram illustrating an example of the training data in which the types of waste material and identification targets other than waste material are labeled on the image data obtained by capturing the inside of the waste pit. In the example illustrated in Fig. 5, unbroken waste bags, pruned branches, and futons are labeled by types as waste material and the crane 5, the mountain cliffs of waste material, the side walls of the waste pit 3, and the floor of the plant 100 are labeled by types as identification targets other than waste material on the image data obtained by capturing the inside of the waste pit.

The image data acquisition unit 11b is configured to acquire new image data obtained by capturing the inside of the waste pit 3 from the imaging device 6. The new image data acquired by the image data acquisition unit 11b is stored in the storage unit 12.

The type identification unit 11c is configured to identify the type of the waste material accumulated in the waste pit 3 by using the learned identification algorithm 12a generated by the identification algorithm generation unit 11a when the new image data acquired by the image data acquisition unit 11b is given as an input.

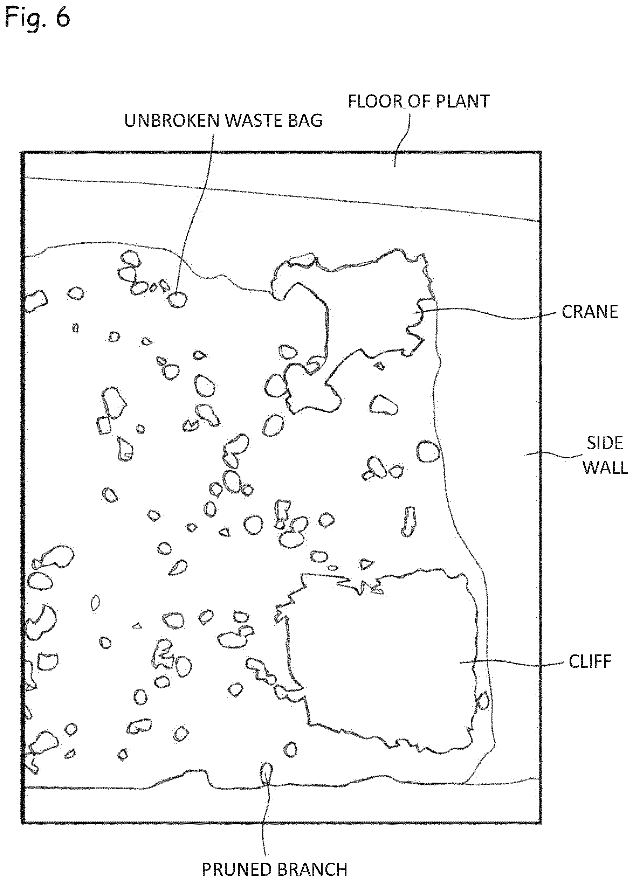

The type identification unit 11c may be configured to identify the type of the waste material accumulated in the waste pit 3 and the type of an identification target other than the waste material by using the learned identification algorithm 12a when the new image data acquired by the image data acquisition unit 11b is given as an input. Fig. 6 is a diagram illustrating an example of data in which an identification result by the type identification unit 11c is displayed to be superimposed on the image data obtained by capturing the inside of the waste pit. In the example illustrated in Fig. 6, the waste material (unbroken waste bags and pruned branches) and the identification targets other than the waste material (the crane 5, the mountain cliffs of waste material, the side walls of the waste pit 3, and the floor of the plant 100) identified by the type identification unit 11c are displayed to be superimposed on the image data by types.

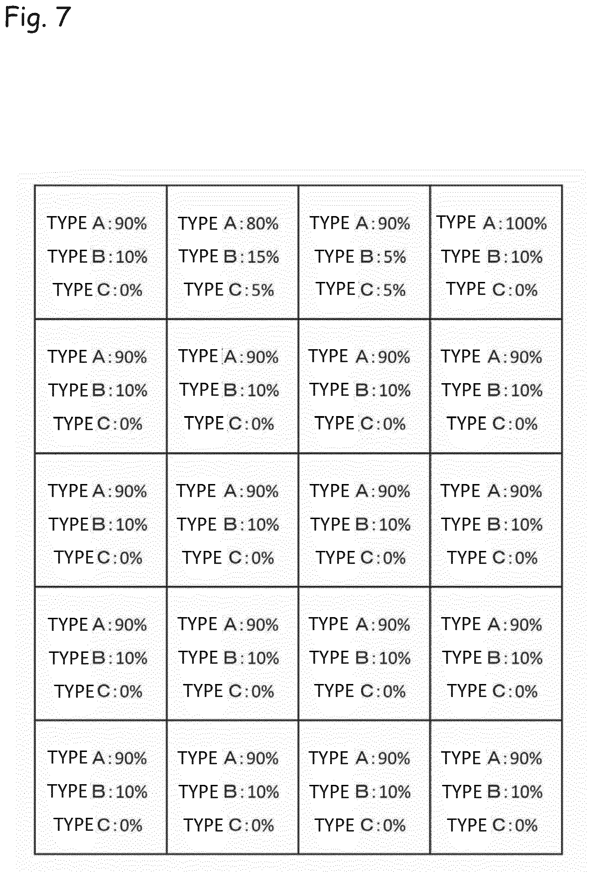

As illustrated in Fig. 7, on the basis of the identification result, the type identification unit 11c may be configured to generate a map which displays the ratio of the types of the waste material accumulated in the waste pit 3 for each area. In the example illustrated in Fig. 7, the inside of the waste pit 3 is divided into a 5×4 grid, and the ratio of the types of waste material identified by the type identification unit 11c is displayed for each area.

The plant control unit 11d is configured to control the waste treatment plant 100 on the basis of the identification result of the type identification unit 11c.

In the example illustrated in Fig. 1, the plant control unit 11d includes a crane control unit 11d1 configured to transmit the identification result of the type identification unit 11c (that is, the information on the type of waste material identified from the image data) to the crane control device 50 for controlling the crane 5 which agitates or transports waste material and a combustion control unit 11d2 configured to transmit the identification result of the type identification unit 11c (that is, the information on the type of waste material identified from the image data) to the combustion control device 20 for controlling the combustion of the waste material.

Incidentally, in the example illustrated in Fig. 1, the plant control unit 11d includes both the crane control unit 11d1 and the combustion control unit 11d2. However, the present invention is not limited to this, and the plant control unit may include only one of the crane control unit 11d1 and the combustion control unit 11d2.

For example, the crane control unit 11d1 is configured to transmit a map (see Fig. 7) which displays the ratio of the types of the waste material accumulated in the waste pit 3 for each area as the identification result of the type identification unit 11c to the crane control device 50. On the basis of the map received from the crane control unit 11d1, the crane control device 50 operates the crane 5 to agitate the waste material in the waste pit 3 so that the ratio of the types of waste material is equal in all areas.

For example, the combustion control unit 11d2 is configured to transmit the map (see Fig. 7) which displays the ratio of the types of the waste material accumulated in the waste pit 3 for each area as the identification result of the type identification unit 11c to the combustion control device 20. On the basis of the map received from the combustion control unit 11d2, the combustion control device 20 grasps the ratio of the types of waste material which is grabbed by the crane 5 and transported together from the waste pit 3 to the hopper 4, and controls the combustion of waste material according to the ratio of waste material which is fed through the hopper 4 into the incinerator 1 (for example, controls the moving rate of the stoker and/or grates and the amount of supplied air).

On the basis of the identification result of the type identification unit 11c (that is, the information of the worker or the transport vehicle identified from the image data), the fall detection unit 11e is configured to detect the fall of the worker or the transport vehicle from the platform 21 into the waste pit 3. The fall detection unit 11e may be configured to transmit the identification result of the type identification unit 11c (that is, the information on the worker or transport vehicle identified from the image data) to a fall detection device (not illustrated) which detects the presence of the worker or the carry-in vehicle in the waste pit 3 where the waste material is accumulated. The fall detection device (not illustrated) issues an alarm or operates the crane 5 to rescue the worker on the basis of the identification result of the type identification unit 11c transmitted from the fall detection unit 11e.

The foreign matter feeding detection unit 11f is configured to detect the foreign matter fed into the waste pit 3 on the basis of the identification result of the type identification unit 11c (that is, the information on the type of waste material identified from the image data). Here, the "foreign matter" means unexpected waste material which is not desired to be fed into the waste pit 3 but is likely to be fed. The examples thereof include those that should not be incinerated, specifically, fluorescent lamps, mercury-containing waste, cylinders, cans, and explosives such as oil tanks. The foreign matter feeding detection unit 11f may be configured to transmit the identification result (that is, the information on the type of waste material identified from the image data) of the type identification unit to a foreign matter detection device (not illustrated) which detects the foreign matter fed into the waste pit 3 where the waste material is accumulated. The foreign matter detection device (not illustrated) refers to a database which stores the company or vehicle who fed waste material into the waste pit 3 together with time information and identifies the company or vehicle who has fed the foreign matter into the waste pit 3 on the basis of the identification result of the type identification unit 11c transmitted from the foreign matter feeding detection unit 11f.

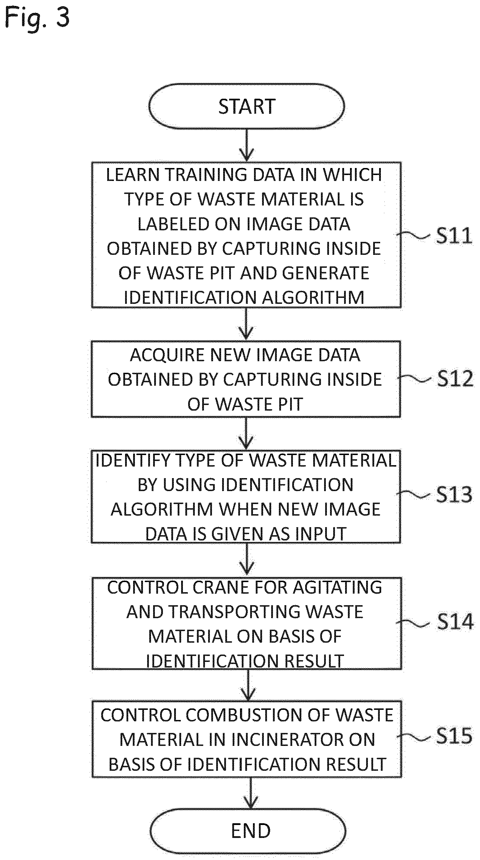

Next, an example of an information processing method by the information processing device 10 having such a configuration will be described. Fig. 3 is a flowchart illustrating an example of the information processing method.

As illustrated in Fig. 3, first, the identification algorithm generation unit 11a learns the training data in which the type of waste material is labeled on the past image data obtained by capturing the inside of the waste pit 3 and generates the learned identification algorithm 12a which identifies the type of waste material when new image data obtained by capturing the image of the inside of the waste pit 3 is given as an input (step S11).

The identification algorithm generation unit 11a may learn the training data (for example, see Fig. 5) in which the type of waste material is labeled and also the identification targets other than the waste material is labeled by types on the past image data obtained by capturing the inside of the waste pit 3, and may generate the learned identification algorithm 12a which identifies the type of an identification target other than waste in addition to the type of waste material when new image data obtained by capturing the image of the inside of the waste pit 3 is given as an input.

Next, the image data acquisition unit 11b acquires new image data 12b (see, for example, Fig. 4) obtained by capturing the inside of the waste pit 3 from the imaging device 6 (step S12). The new image data 12b acquired by the image data acquisition unit 11b is stored in the storage unit 12.

Next, the type identification unit 11c identifies the type of the waste material accumulated in the waste pit 3 using the learned identification algorithm 12a generated by the identification algorithm generation unit 11a when new image data acquired by the image data acquisition unit 11b is given as an input (step S13).

The type identification unit 11c may identify the type of the waste material accumulated in the waste pit 3 and the type of an identification target other than the waste material (for example, see Fig. 6) by using the learned identification algorithm 12a generated by the identification algorithm generation unit 11a when new image data (for example, see Fig. 4) acquired by the image data acquisition unit 11b is given as an input. Further, on the basis of the identification result of the type of waste material, the type identification unit 11c may generate a map (for example, see Fig. 7) which displays the ratio of the types of the waste material accumulated in the waste pit 3 for each area.

Next, the plant control unit 11d controls the waste treatment plant on the basis of the identification result by the type identification unit 11c.

Specifically, for example, the crane control unit 11d1 transmits a map which displays the ratio of the types of waste material for each area as illustrated in Fig. 7 as the identification result of the type identification unit 11c to the crane control device 50 which controls the crane 5 which agitates or transports waste material (step S14). On the basis of the map received from the crane control unit 11d1, the crane control device 50 operates the crane 5 to agitate the waste material in the waste pit 3 so that the ratio of the types of waste material is equal in all areas.

The combustion control unit 11d2 transmits a map which displays the ratio of the types of waste material for each area as illustrated in Fig. 7 as the identification result of the type identification unit 11c to the combustion control device 20 which controls the combustion of waste material (step S15). On the basis of the map received from the combustion control unit 11d2, the combustion control device 20 grasps the ratio of the types of waste material which is grabbed by the crane 5 and transported together from the waste pit 3 to the hopper 4, and controls the combustion of waste material according to the ratio of waste material which is fed through the hopper 4 into the incinerator 1 (for example, controls the moving rate of the stoker and/or grates and the amount of supplied air) .

Incidentally, in a case where a worker or a transport vehicle is identified from the image data of the inside of the waste pit 3 by the type identification unit 11c, on the basis of the identification result of the type identification unit 11c, the fall detection unit 11e may detect the fall of the worker or the transport vehicle from the platform 21 into the waste pit 3 and transmits the identification result of the type identification unit 11c to the fall detection device (not illustrated).

In a case where a foreign matter is detected from the image data of the inside the waste pit 3 by the type identification unit 11c, on the basis of the identification result of the type identification unit 11c, the foreign matter feeding detection unit 11f may detect a foreign matter fed into the waste pit 3 and transmit the identification result of the type identification unit 11c to the foreign matter detection device (not illustrated).

Incidentally, JP 2007-126246 A proposes a method of distinguishing general waste and foreign waste by color tone. However, it is difficult to identify the type of waste material simply by color tone, and for example, even when some shredded oversized waste is mixed, the waste material may be determined as general waste as a whole. Therefore, there is a risk that a certain amount or more of foreign waste material which affects the combustion state and a certain amount or more of waste material which causes troubles of each device are fed into the incinerator.

JP 2015-124955 A proposes a method of detecting the degree of tearing of the waste bag on the basis of a brightness value. However, this method can only detect a waste bag. In some cases, in addition to the waste bag, various types of waste material such as pruned branches and futons are fed into the actual waste pit, and thus it is difficult to apply the above method to such an actual waste pit.

On the other hand, according to the present embodiment, the type of the waste material accumulated in the waste pit 3 is identified by using the learned identification algorithm 12a generated by machine learning when the image data obtained by capturing the inside of the waste pit 3 is given as an input, and thus, it is possible to identify the waste material (for example, unbroken waste bags) which affects the combustion state when a certain amount or more is fed and the waste material (for example, pruned branches) which causes troubles of each device. Accordingly, it is possible to prevent a certain amount or more of erroneous feeding of such special waste material and to perform stable treatment without affecting the combustion state and each device.

Further, according to the present embodiment, the identification algorithm generation unit 11a is configured to generate the learned identification algorithm 12a by learning the training data in which the type of waste material is labeled and the identification targets other than the waste material is labeled by types on the past image data obtained by capturing the image of the inside of the waste pit 3. The type identification unit 11c identifies the type of the waste material accumulated in the waste pit 3 and the type of the identification targets other than the waste material by using the identification algorithm 12a when new image data acquired by the image data acquisition unit 11b is given as an input. As a result of actual verification by the inventors of the present invention, it is confirmed that the identification accuracy of waste material can be remarkably improved by such aspects. According to the examination by the inventors of the present invention, it is considered that the type identification unit 11c can be prevented from identifying the identification targets other than waste material as a certain type of waste material with hesitating to determine; for example, identifying the side wall of the waste pit 3 as sludge with hesitating to determine.

Incidentally, it is possible to make various changes to the above-described embodiment. Hereinafter, a modification of the above-described embodiment will be described.

In the above-described embodiment, the combustion control unit 11d2 is configured to transmit the map (see Fig. 7) which displays the ratio of the types of the waste material accumulated in the waste pit 3 for each area as the identification result of the type identification unit 11c to the combustion control device 20. However, the invention is not limited to this, and the combustion control unit 11d2 may be configured to transmit a label in which the ratio of the type of waste material is converted into quality information, for example, a map in which the label like "OK for feeding", "NG for feeding", "calorie L (Low)", "calorie M (Middle)", "calorie H (High)", or the like is displayed for each area as the identification result of the type identification unit 11c to the combustion control device 20. Further, the combustion control unit 11d2 may be configured to transmit a label indicating that the rate of influence on the combustion state is large (for example, a label like "unbroken waste bag is existing", "bottom waste is existing" or the like) as the identification result of the type identification unit 11c to the combustion control device 20. Similarly, the crane control unit 11d1 may be configured to transmit a label indicating that the rate of influence on each device is large (for example, a label like "pruned branches are existing", "shredded oversized waste is existing" or the like) as the identification result of the type identification unit 11c to the crane control device 50.

When the type identification unit 11c generates a map which displays the ratio of the types of the waste material accumulated in the waste pit 3 for each area on the basis of the identification result, in the image data acquired by the image data acquisition unit 11b, the image data may be simply divided into areas to display the ratio of the type of waste material for each area, or the image data may be associated with the address allocation of the waste pit 3 to display the ratio of the type of waste material for each address.

As a method of associating the image data with the crane address, the crane 5, the position of which relative to the waste pit 3 is measureable, is marked in advance, and then the imaging device 6 photographs the marked crane 5 to be included on a large number of images, and the type identification unit 11c estimates the relative position and direction of the imaging device 6 with respect to the waste pit 3 according to the large number of images on which the marked crane 5 is included, and estimates the address at which a pixel on the image data exists according to the estimated position and imaging direction of the imaging device 6. Alternatively, the imaging device 6 may photograph the crane 5, the position of which relative to the waste pit 3 is measureable, to be included on a large number of images, and the crane 5 in the images may be marked by the type identification unit 11c, so that the unit estimates the relative position and direction of the imaging device 6 with respect to the waste pit 3 according to the large number of images on which the crane 5 is marked, and estimates the address at which a pixel on the image data exists according to the estimated position and imaging direction of the imaging device 6.

A part of the processing of the control unit 11 may be performed not on the information processing device 10 but on a cloud server different from the information processing device 10. A part of the storage unit 12 may be not on the information processing device 10 but on a cloud server different from the information processing device 10.

For example, the processing of the identification algorithm generation unit 11a may be executed on the cloud server, and the identification algorithm 12a may be generated. Further, the processing of the type identification unit 11c may be executed on the cloud server by using the identification algorithm 12a generated on the cloud server by the identification algorithm generation unit 11a. The information processing device 10 may download the identification algorithm 12a from the cloud server, and the processing of the type identification unit 11c may be executed by using the identification algorithm 12a in the information processing device 10.

The control unit 11 may be configured to periodically monitor the identification result of the type identification unit 11c and determine the necessity of revising and updating the model of the identification algorithm 12a.

For example, the control unit 11 uses the edge server to determine whether the identification result of the type identification unit 11c is normal or abnormal, and determines whether or not the image data and the identification result have a problem in the operation of the incinerator 1 when the abnormality is detected. In a case where it is determined that there is an operational problem, the skilled operator labels the image data by which the abnormality is detected by type of waste material again and prepares new training data, and the identification algorithm generation unit 11a learns the newly prepared training data to generate the identification algorithm 12a.

When an feeding request comes from the incinerator 1, the crane control device 50 may select the waste from the waste pit 3, which meets the feeding criteria based on the threshold value for the ratio of the waste by waste type, according to the map received from the crane control unit 11d1 and may operate the crane 5 to feed the waste into the hopper 4.

When the crane control device 50 selects the waste which meets the feeding criteria from the waste pit 3, the waste may be selected such that the difference between the ratio of the waste by waste type and the ratio of the waste previously fed into the hopper 4 by waste type is minimized.

As the above threshold value of the ratio for the feeding criteria, the crane control device 50 may use one or more of the threshold value of the ratio for unbroken waste bags, paper waste, pruned branches, futons, sludge, shredded oversized waste, cardboards, hemp bags, paper bags, bottom waste, wood waste, textile waste, clothing waste, plastic waste, animal residue, animal corpse, kitchen waste, vegetation, soil, medical waste, incineration ash, agricultural vinyl, PET bottles, styrene forms, meat and bone meal, agricultural products, pottery, glass scrap, metal scrap, debris, concrete scrap, tatami mat, bamboo, straw, and activated carbon.

As a method of determining the above feeding criteria, the crane control device 50 may determine the threshold value of the ratio for each waste type corresponding to a case where the skilled operator determining whether or not to be fed, according to comparison between the past image data obtained by capturing the inside of the waste pit 3, for which whether or not to be fed is classified and labeled by skilled operator visually observing the quality of the waste material shown in the image data from the viewpoint of combustion stability and the effect on the equipment, with the estimation result of the ratio for each waste in the same image data by using the type identification unit 11c.

The crane control device 50 may determine the threshold value for the ratio of each waste type according to the map which is received from the crane control unit 11d1 and displays the ratio of the types of the waste accumulated in the waste pit 3 for each area, by associating the ratio data of each waste type actually fed into the hopper 4 with the process data of the incinerator 1, or may change the threshold value for the ratio dynamically by associating both data in a time series manner.

The crane control device 50 may dynamically change the threshold value for the ratio on the basis of not only the above process data but also the weather information. For example, when the weather information indicates that it rains on the day, the crane control device 50 changes the feeding criteria based on the threshold value for the ratio by lowering the threshold value for the ratio of unbroken waste bags or raising the threshold value for the ratio of shredded oversized waste material.

The crane control device 50 may dynamically change the threshold value for the ratio on the basis of day information. For example, since the day information indicates that the amount of waste in the waste pit 3 is small on Sunday, in order to reduce the amount of waste incineration, the crane control device 50 changes the feeding criteria based on the threshold value for the ratio by raising the threshold value for the ratio of unbroken waste bags.

The crane control device 50 may dynamically change the threshold value for the ratio according to the planned operating value of the waste treatment plant 100. For example, when the evaporation amount drops from the current evaporation amount set value, the crane control device 50 changes the feeding criteria based on the threshold value of the ratio by lowering the threshold value of the ratio for unbroken waste bags or raising the threshold value of the ratio for shredded oversized waste material.

When an feeding request comes from the incinerator 1, in a case where the waste which meets the feeding criteria based on the threshold value of the ratio for each type does not exist in the map received from the crane control 11d1, the crane control device 50 may operate the crane 5 to feed the waste which is close to the feeding criteria into the hopper 4 or to agitate the waste which is close to the feeding criteria and prepare the waste which meets the feeding criteria.

The crane control device 50 may operate the crane 5 to stack only the waste which meets the feeding criteria based on the threshold value of the ratio for each waste type in the map received from the crane control 11d1 at a specific place in the waste pit 3. In this way, the waste which meets the feeding criteria can be stacked in the waste pit 3.

The crane control device 50 may detect the waste material which affects the combustion state (for example, sludge) in the waste pit 3 or the waste material which causes troubles of each device (for example, pruned branches) in the map received from the crane control 11d1 on the basis of the threshold value of the ratio for each waste type and may operate the crane 5 to accumulate such waste material in a specific place in the waste pit 3 or disperse such waste material in a specific place.

In a case where the waste which does not meet the agitation criteria based on the threshold value of the ratio for each waste type exists in the waste pit 3 in the map received from the crane control 11d1, the crane control device 50 may operate the crane 5 to agitate the waste. The above agitation criteria may be the same as or different from the feeding criteria.

The crane control device 50 may change the above agitation criteria dynamically by using one or more of the process data of the incinerator 1, weather information, day information, waste carry-in company information, waste carry-in amount (total amount or carry-in amount by waste type) information, waste carry-in speed, waste pit level (whole or specific area) information, crane operation status (operable for two cranes, operable for only one crane, currently operating for one crane, and currently operating for two cranes) information, and waste-collection-vehicle collection-route/collection-area information.

In the map received from the crane control 11d1, the crane control device 50 may determine the agitation status of the entire waste pit 3 on the basis of the ratio of each waste type for each area and determine the necessity of operating two cranes 5, and may operate the cranes 5 to start the operation of the second crane or retract the second crane.

In the above example, the crane control device 50 operates the crane 5. However, a crane operation determination device (not illustrated) may be provided on the upstream side of the crane control device 50, the crane operation determination device may determine the operation content of the crane 5, the command of the operation content may be transmitted to the crane control device 50, and the crane 5 may be operated on the basis of the command content received by the crane control device 50 receiving the command. The crane operation determination device transmits/receives information to/from the information processing device 10 and the crane control device 50. Alternatively, the crane operation determination device may be a part of the information processing device 10, that is, the information processing device 10 may include the crane operation determination device.

The crane operation determination device may receive an feeding request signal from the crane control device 50 when a feeding request comes from the incinerator 1, on the basis of the map received from the crane control unit 11d1, the waste on the map which meets the feeding criteria based on the threshold value of the ratio for each waste type may be selected from the waste pit 3, a command may be transmitted to the crane control device 50 to feed the waste into the hopper 4, and the crane control device 50 may operate the crane 5 on the basis of the received command. Further, when the crane operation determination device selects the waste which meets the feeding criteria from the waste pit, the waste may be selected such that the difference between the ratio of the waste by waste type and the ratio of the waste previously fed into the hopper 4 by waste type is minimized.

In a case where the crane operation determination device receives an feeding request signal from the crane control device 50 when a feeding request comes from the incinerator 1, and the waste which meets the feeding criteria based on the threshold value of the ratio for each type does not exist in the map received from the crane control 11d1, the crane operation determination device may transmit a command to the crane control device 50 to feed the waste which is close to the feeding criteria into the hopper 4 or to agitate the waste which is close to the feeding criteria and make the waste which meets the feeding criteria, and the crane control device 50 may operate the crane 5.

The crane operation determination device may transmit a command to the crane control device 50 to stack only the waste which meets the feeding criteria based on the threshold value of the ratio for each waste type in the map received from the crane control 11d1 at a specific place in the waste pit 3, and the crane control device 50 may operate the crane 5. In this way, the waste which meets the feeding criteria can be stacked in the waste pit 3.

The crane operation determination device may detect the waste material which affects the combustion state (for example, sludge) in the waste pit 3 or the waste material which causes troubles of each device (for example, pruned branches) in the map received from the crane control 11d1 on the basis of the threshold value of the waste for each waste type and may transmit a command to the crane control device 50 to accumulate such waste material in a specific place in the waste pit 3 or disperse such waste material in a specific place. The crane control device 50 may operate the crane 5.

In a case where the waste which does not meet the agitation criteria based on the threshold value of the ratio for each waste type exists in the waste pit 3 in the map received from the crane control 11d1, the crane operation determination device may transmit a command to the crane control device 50 to agitate the waste, and the crane control device 50 may operate the crane 5. The above agitation criteria may be the same as or different from the feeding criteria.

In the map received from the crane control 11d1, the crane operation determination device may determine the agitation status of the entire waste pit 3 on the basis of the ratio of each waste type for each area and determine the necessity of operating two cranes 5 and may transmit a command to the crane control device 50, and the crane control device 50 may operate the crane 5 to start the operation of the second crane or retract the second crane.

Incidentally, in the above-described embodiment, an example is described in which the information processing device 10 for identifying the type of waste material is used in the waste pit 3 of the waste treatment plant 100. However, as long as the place where the information processing device 10 is used is a waste accumulation place where the waste material is accumulated, the invention is not limited to the waste pit 3 of the waste treatment plant 100, and for example, the information processing device 10 may be used at receiving place of recycling facilities.

Although the embodiment and modification have been described above by way of illustration, the scope of the present invention is not limited to these and can be changed or modified according to the purpose within the scope described in the claims. Further, each embodiment and modification can be appropriately combined within a range that the processing contents do not contradict each other.

The information processing device 10 according to the above-described embodiment may be configured by one or more computers. However, a program for realizing the information processing device 10 on one or more computers and a recording medium in which the program is recorded in non-transitory manner are also the subject matters of the present invention.

## Claims

1. An information processing device (10) comprising:
a type identification unit (11c) configured to identify a type of waste material accumulated in a waste pit or in a waste accumulation place and a type of an identification target other than the waste material when new image data of an inside of the waste pit or the waste accumulation place, respectively, is given as an input by using an identification algorithm (12a) which has been learned with training data prepared by labeling a type of waste material and by labelling the identification target other than the waste material by type of the target on past image data obtained by capturing the inside of the waste pit or the waste accumulation place, respectively, where the waste material is accumulated.

2. The information processing device (10) according to claim 1, wherein
the identification algorithm (12a) includes one or more of statistical estimation, reinforcement learning and deep learning using linear regression, Boltzmann machine, neural network, support vector machine, Bayesian network, sparse regression, decision tree or random forest.

3. The information processing device (10) according to claim 1 or 2, wherein
the image data (12b) includes one or more of shape/color image data obtained by capturing waste material with an RGB camera, near-infrared image data obtained by capturing the waste material with a near-infrared camera, and three-dimensional image data obtained by capturing the waste material with a 3D camera or an RGB-D camera.

4. The information processing device (10) according to any one of claims 1 to 3, further comprising:
a plant control unit (11d) configured to control a waste treatment plant on a basis of an identification result of the type identification unit (11c).

5. The information processing device (10) according to claim 4, wherein
the plant control unit (11d) includes one or both of a crane control unit (11d1) configured to transmit the identification result of the type identification unit (11c) to a crane control device for controlling a crane which agitates or transports the waste material and a combustion control unit (11d2) configured to transmit the identification result of the type identification unit (11c) to a combustion control device (20) for controlling combustion of the waste material.

6. The information processing device (10) according to claim 1, wherein
the type of the identification target other than waste material includes one or more of a beam of the waste treatment plant, a side wall of the waste pit or the waste accumulation place, a mountain cliff of the waste material accumulated in the waste pit or the waste accumulation place, a crane for agitating or transporting the waste material, a wall, a pillar, a floor, a window, a ceiling, a door, a stair, a girder, and a corridor, a dividing wall of the waste pit, a waste feeding hopper, a loading door of the waste treatment plant, a worker, and a carry-in vehicle.

7. The information processing device (10) according to any one of claims 1 to 6, further comprising:
a foreign matter feeding detection unit (11f) configured to detect a foreign matter fed into the waste pit or the waste accumulation place on the basis of the identification result of the type identification unit (11c).

8. The information processing device (10) according to claim 7, wherein
the foreign matter feeding detection unit (11f) is configured to transmit the identification result of the type identification unit (11c) to the foreign matter detection device for detecting the foreign matter fed into the waste pit or the waste accumulation place where the waste material is accumulated.

9. The information processing device (10) according to any one of claims 1 to 8, further comprising:
a fall detection unit (11e) configured to detect a fall of a worker or a carry-in vehicle into the waste pit or the waste accumulation place on the basis of the identification result of the type identification unit (11c).

10. The information processing device (10) according to claim 9, wherein
the fall detection unit (11e) is configured to transmit the identification result of the type identification unit (11c) to a fall detection device for detecting presence of the worker or a carry-in vehicle in the waste pit or the waste accumulation place where the waste material is accumulated.

11. The information processing device (10) according to any one of claims 1 to 10, wherein
the type of the waste material includes one or more of unbroken waste bags, paper waste, pruned branches, futons, sludge, shredded oversized waste, cardboards, hemp bags, paper bags, bottom waste, wood waste, textile waste, clothing waste, plastic waste, animal residue, animal corpse, kitchen waste, vegetation, soil, medical waste, incineration ash, bicycles, chests, beds, shelves, desks, chairs, agricultural vinyl, PET bottles, styrene forms, meat and bone meal, agricultural products, pottery, glass scrap, metal scrap, debris, concrete scrap, tatami mat, bamboo, straw, and activated carbon.

12. An information processing program for causing a computer to function as:
a type identification unit (11c) configured to identify a type of waste material accumulated in a waste pit or in a waste accumulation place and a type of an identification target other than the waste material when new image data of an inside of the waste pit or the waste accumulation place, respectively, is given as an input by using an identification algorithm (12a) which has been learned with training data prepared by labeling a type of waste material and by labelling the identification target other than the waste material by type of the target on past image data obtained by capturing the inside of the waste pit or the waste accumulation place, respectively, where the waste material is accumulated.

13. An information processing method executed by a computer, the method comprising:
identifying a type of waste material accumulated in a waste pit or in a waste accumulation place and a type of an identification target other than the waste material when new image data of an inside of the waste pit or the waste accumulation place, respectively, is given as an input by using an identification algorithm (12a) which has been learned with training data prepared by labeling a type of waste material and by labelling the identification target other than the waste material by type of the target on past image data obtained by capturing the inside of the waste pit or the waste accumulation place, respectively, where the waste material is accumulated.

14. The information processing device according to any one of claims 1 to 11, further comprising:
an identification algorithm generation unit (11a) configured to generate the identification algorithm (12a) by learning training data prepared by labeling the type of the waste material on past image data obtained by capturing an inside of the waste pit where the waste material is accumulated.

## Patentansprüche

1. Informationsverarbeitungsvorrichtung (10), die Folgendes aufweist:
eine Typidentifikationseinheit (11c), die konfiguriert ist, um einen Typ von Abfallmaterial zu identifizieren, das in einer Abfallgrube oder in einem Abfallsammelplatz gesammelt ist und einen Typ eines anderen Identifikationsziels als das Abfallmaterial, wenn neue Bilddaten eines jeweiligen Inneren der Abfallgrube oder des Abfallsammelplatzes als eine Eingabe unter Verwendung eines Identifikationsalgorithmus (12a) gegeben werden, der mit Trainingsdaten angelernt wurde, die vorbereitet wurden durch Markieren eines Typs von Abfallmaterial und durch markieren des anderen Identifikationsziels als das Abfallmaterial gemäß einem Typ des Ziels auf früheren Bilddaten, die erhalten wurden, in dem das jeweilige Innere der Abfallgrube oder des Abfallsammelplatzes aufgenommen wurde, wo das Abfallmaterial gesammelt ist.

2. Informationsverarbeitungsvorrichtung (10) nach Anspruch 1, wobei der Identifikationsalgorithmus (12a) eines oder mehreres von Folgenden Aufweist: statistische Schätzung, Verstärkungslernen und tiefes Lernen bzw. Deep-Learning unter Verwendung von linearer Regression, Boltzmann-Maschine, neuronales Netzwerk, Support-Vector-Machine bzw. SVM, Baye'sches Netzwerk, spärliche Regression bzw. Sparse Regression, einen Entscheidungsbaum oder zufällige Verzweigung.

3. Informationsverarbeitungsvorrichtung (10) nach Anspruch 1 oder 2, wobei
die Bilddaten (12b) eines oder mehrere von Folgenden aufweist:
Form/Farbbilddaten, die durch Aufnehmen von Abfallmaterial mit einer RGB-Kamera erhalten wurden, Nah-Infrarotbilddaten, die durch Aufnehmen des Abfallmaterials mit einer Nah-Infrarotkamera erhalten wurden, und dreidimensionale Bilddaten, die durch Aufnehmen des Abfallmaterials mit einer 3D-Kamera oder einer RGB-D-Kamera erhalten wurden

4. Informationsverarbeitungsvorrichtung (10) nach einem der Ansprüche 1 bis 3, die weiter Folgendes aufweist:
eine Anlagensteuereinheit (11d), die konfiguriert ist, um eine Abfallbehandlungsanlage auf Basis eines Identifikationsergebnisses der Typidentifikationseinheit (11c) zu steuern.

5. Informationsverarbeitungsvorrichtung (10) nach Anspruch 4, wobei die Anlagensteuereinheit (11d) eines oder beides von Folgenden aufweist: eine Kransteuereinheit (11d1), die konfiguriert ist, um das Identifikationsergebnis der Typidentifikationseinheit (11c) zu einer Kransteuervorrichtung zu übertragen, um einen Kran zu steuern, der das Abfallmaterial umwälzt oder transportiert, und eine Verbrennungssteuereinheit (11d2), die konfiguriert ist, um das Identifikationsergebnis der Typidentifikationseinheit (11c) an eine Verbrennungssteuervorrichtung (20) zu übertragen, um die Verbrennung des Abfallmaterials zu steuern.

6. Informationsverarbeitungsvorrichtung (10) nach Anspruch 1, wobei der Typ des anderen Identifikationsziels als das Abfallmaterial ein oder mehrere von Folgenden aufweist: einen Träger der Abfallbehandlungsanlage, eine Seitenwand der Abfallgrube oder des Abfallsammelplatzes, einen Bergabriss des Abfallmaterials, das in der Abfallgrube oder auf dem Abfallsammelplatz gesammelt ist, einen Kran zum Umwälzen oder Transportieren des Abfallmaterials, eine Wand, eine Säule, einen Boden, ein Fenster, eine Decke, eine Tür, eine Treppe, einen Träger und einen Korridor, eine Unterteilungswand der Abfallgrube, einen Abfalleinspeisungstrichter, eine Ladetür der Abfallbehandlungsanlage, einen Arbeiter und ein Transportfahrzeug.

7. Informationsverarbeitungsvorrichtung (10) nach einem der Ansprüche 1 bis 6, die weiter Folgendes aufweist:
eine Fremdstoffeinspeisungsdetektionseinheit (11f). die konfiguriert ist, um einen Fremdstoff zu detektieren, der in die Abfallgrube oder auf den Abfallsammelplatz geliefert wird, und zwar auf Basis des Identifikationsergebnisses der Typidentifikationseinheit (11c).

8. Informationsverarbeitungsvorrichtung (10) nach Anspruch 7 wobei die Fremdstoffeinspeisungsdetektionseinheit (11f) konfiguriert ist, um das Identifikationsergebnis der Typidentifikationseinheit (11c) an die Fremdstoffdetektionsvorrichtung zu übertragen, um den Fremdstoff zu detektieren, der in die Abfallgrube oder auf den Abfallsammelplatz geliefert wurde, wo das Abfallmaterial gesammelt wird.

9. Informationsverarbeitungsvorrichtung (10) nach einem der Ansprüche 1 bis 8, die weiter Folgendes aufweist:
eine Falldetektionseinheit (11e), die konfiguriert ist, um das Fallen eines Arbeiters oder eines Lieferfahrzeugs in die Abfallgrube oder den Abfallsammelplatz zu detektieren, und zwar auf Basis des Identifikationsergebnisses der Typidentifikationseinheit (11c).

10. Informationsverarbeitungsvorrichtung (10) nach Anspruch 9, wobei die Falldetektionseinheit (11e) konfiguriert ist, um das Identifikationsergebnis der Typidentifikationseinheit (11c) an eine Falldetektionsvorrichtung zu übertragen, und zwar zum Detektieren der Anwesenheit des Arbeiters oder eines Lieferfahrzeugs in der Abfallgrube oder auf dem Abfallsammelplatz, wo das Abfallmaterial gesammelt wird.

11. Informationsverarbeitungsvorrichtung (10) nach einem der Ansprüche 1 bis 10, wobei
der Typ des Abfallmaterials einen oder mehrere von Folgenden aufweist: nicht aufgebrochene Abfallbeutel, Papierabfall, abgeschnittene Zweige, Matratzen, Schlamm bzw. Klärschlamm, zerkleinerter Sperrmüll, Kartons, Stoffbeutel, Papiertüten, Bodenabfall, Holzabfall, Textilabfall, Stoffabfall, Plastikabfall, Tierreste, Tierleichen, Küchenabfall, Pflanzen, Mutterboden, medizinischer Abfall, Verbrennungsasche, Fahrräder, Kisten, Betten, Regale, Tische, Stühle, Ackerbauvinyl, PET-Flaschen, Styrol-Formen, Fleisch- und Knochenschrot, Ackerbauprodukte, Töpferwaren, Glasabfall, Metallabfall, Kehricht, Bodenabfall, Tatami-Matten, Bambus, Stroh, und Aktivkohle.

12. Informationsverarbeitungsprogramm, um zu bewirken, dass ein Computer funktioniert als:
eine Typidentifikationseinheit (11c), die konfiguriert ist, um einen Typ von Abfallmaterial zu identifizieren, das in einer Abfallgrube oder in einem Abfallsammelplatz gesammelt ist und einen Typ eines anderen Identifikationsziels als das Abfallmaterial, wenn neue Bilddaten eines jeweiligen Inneren der Abfallgrube oder des Abfallsammelplatzes als eine Eingabe unter Verwendung eines Identifikationsalgorithmus (12a) gegeben wird, der mit Trainingsdaten angelernt wurde, die vorbereitet wurden durch Markieren eines Typs von Abfallmaterial und durch markieren des anderen Identifikationsziels als das Abfallmaterial gemäß einem Typ des Ziels auf früheren Bilddaten, die erhalten wurden, in dem das jeweilige Innere der Abfallgrube oder des Abfallsammelplatzes aufgenommen wurde, wo das Abfallmaterial gesammelt ist.

13. Informationsverarbeitungsverfahren, das von einem Computer ausgeführt wird, wobei das Verfahren Folgendes aufweist:
Identifizieren eines Typs von Abfallmaterial, das in einer Abfallgrube oder in einem Abfallsammelplatz gesammelt ist und einen Typ eines anderen Identifikationsziels als das Abfallmaterial, wenn neue Bilddaten eines jeweiligen Inneren der Abfallgrube oder des Abfallsammelplatzes als eine Eingabe unter Verwendung eines Identifikationsalgorithmus (12a) gegeben werden, der mit Trainingsdaten angelernt wurde, die vorbereitet wurden durch Markieren eines Typs von Abfallmaterial und durch markieren des anderen Identifikationsziels als das Abfallmaterial gemäß einem Typ des Ziels auf früheren Bilddaten, die erhalten wurden, in dem das jeweilige Innere der Abfallgrube oder des Abfallsammelplatzes aufgenommen wurde, wo das Abfallmaterial gesammelt ist.

14. Informationsverarbeitungsvorrichtung nach einem der Ansprüche 1 bis 11, die weiter Folgendes aufweist:
eine Identifikationsalgorithmuserzeugungseinheit (11a), die konfiguriert ist, um den Identifikationsalgorithmus (12a) zu erzeugen, und zwar durch lernen von Trainingsdaten, die vorbereitet wurden durch Markieren des Typs des Abfallmaterials auf früheren Bilddaten, die erhalten wurden, indem ein Inneres der Abfallgrube aufgenommen wurde, wo das Abfallmaterial gesammelt wird.

## Revendications

1. Dispositif de traitement d'informations (10) comprenant :
une unité d'identification de type (11c) configurée pour identifier un type de déchet accumulé dans une fosse à déchets ou à un emplacement d'accumulation de déchets et un type d'une cible d'identification autre que les déchets lorsque de nouvelles données d'image d'un intérieur de la fosse à déchets ou de l'emplacement d'accumulation de déchets, respectivement, sont fournies en tant qu'entrée en utilisant un algorithme d'identification (12a) qui a été éduqué avec des données d'apprentissage préparées en étiquetant un type de déchet et en étiquetant la cible d'identification autre que les déchets par type de la cible sur des données d'images antérieures obtenues en capturant l'intérieur de la fosse à déchets ou de l'emplacement d'accumulation de déchets, respectivement, où sont accumulés les déchets.

2. Dispositif de traitement d'informations (10) selon la revendication 1, dans lequel
l'algorithme d'identification (12a) comporte un ou plusieurs éléments parmi une estimation statistique, un apprentissage par renforcement et un apprentissage profond utilisant une régression linéaire, une machine de Boltzmann, un réseau neuronal, une machine à vecteurs de support, un réseau bayésien, une régression clairsemée, un arbre de décision ou une forêt aléatoire.

3. Dispositif de traitement d'informations (10) selon la revendication 1 ou 2, dans lequel
les données d'image (12b) comportent une ou plusieurs données parmi des données d'image de forme/couleur obtenues en capturant des déchets avec une caméra RGB, des données d'image proche infrarouge obtenues en capturant les déchets avec une caméra en proche infrarouge et des données d'image tridimensionnelles obtenues en capturant les déchets avec une caméra 3D ou une caméra RGB-D.

4. Dispositif de traitement d'informations (10) selon l'une quelconque des revendications 1 à 3, comprenant en outre :
une unité de commande d'usine (11d) configurée pour commander une usine de traitement de déchets sur la base d'un résultat d'identification de l'unité d'identification de type (11c).

5. Dispositif de traitement d'informations (10) selon la revendication 4, dans lequel
l'unité de commande d'usine (11d) comporte une ou les deux parmi une unité de commande de grue (11d1) configurée pour transmettre le résultat d'identification de l'unité d'identification de type (11c) à un dispositif de commande de grue pour commander une grue qui agite ou transporte les déchets et une unité de commande de combustion (11d2) configurée pour transmettre le résultat d'identification de l'unité d'identification de type (11c) à un dispositif de commande de combustion (20) pour commander la combustion des déchets.

6. Dispositif de traitement d'informations (10) selon la revendication 1, dans lequel
le type de la cible d'identification autre que les déchets inclut un ou plusieurs éléments parmi une poutrelle de l'usine de traitement des déchets, une paroi latérale de la fosse à déchets ou de l'emplacement d'accumulation de déchets, une falaise de montagne des déchets accumulés dans la fosse à déchets ou à l'emplacement d'accumulation de déchets, une grue pour agiter ou transporter les déchets, une paroi, un pilier, un sol, une fenêtre, un plafond, une porte, un escalier, une poutre et un couloir, une cloison de séparation de la fosse à déchets, une trémie d'alimentation en déchets, une porte de chargement de l'usine de traitement des déchets, un ouvrier et un véhicule de transport.

7. Dispositif de traitement d'informations (10) selon l'une quelconque des revendications 1 à 6, comprenant en outre :
une unité de détection d'alimentation en matières étrangères (11f) configurée pour détecter une matière étrangère introduite dans la fosse à déchets ou à l'emplacement d'accumulation de déchets sur la base du résultat d'identification de l'unité d'identification de type (11c).

8. Dispositif de traitement d'informations (10) selon la revendication 7, dans lequel
l'unité de détection d'alimentation en matières étrangères (11f) est configurée pour transmettre le résultat d'identification de l'unité d'identification de type (11c) au dispositif de détection de matières étrangères pour détecter les matières étrangères introduites dans la fosse à déchets ou à l'emplacement d'accumulation de déchets où sont accumulés les déchets.

9. Dispositif de traitement d'informations (10) selon l'une quelconque des revendications 1 à 8, comprenant en outre :
une unité de détection de chute (11e) configurée pour détecter une chute d'un travailleur ou d'un véhicule de transport dans la fosse à déchets ou à l'emplacement d'accumulation de déchets sur la base du résultat d'identification de l'unité d'identification de type (11c).

10. Dispositif de traitement d'informations (10) selon la revendication 9, dans lequel
l'unité de détection de chute (11e) est configurée pour transmettre le résultat d'identification de l'unité d'identification de type (11c) à un dispositif de détection de chute pour détecter la présence du travailleur ou d'un véhicule de transport dans la fosse à déchets ou à l'emplacement d'accumulation de déchets où sont accumulés les déchets.

11. Dispositif de traitement d'informations (10) selon l'une quelconque des revendications 1 à 10, dans lequel
le type de déchet inclut un ou plusieurs éléments parmi des sacs à déchets non cassés, des déchets de papier, des branches élaguées, des futons, des boues, des déchets surdimensionnés déchiquetés, des cartons, des sacs de chanvre, des sacs en papier, des déchets de fond, des déchets de bois, des déchets textiles, des déchets vestimentaires, des déchets plastiques, des résidus d'animaux, des cadavres d'animaux, des déchets de cuisine, de la végétation, de la terre, des déchets médicaux, des cendres d'incinération, des cycles, des caisses, des lits, des étagères, des bureaux, des chaises, du vinyle agricole, des bouteilles en PET, des formes de styrène, des farines de viande et d'os, des produits agricoles, des poteries, des déchets de verre, des déchets métalliques, des débris, des déchets de béton, des tatamis, du bambou, de la paille et du charbon actif.

12. Programme de traitement d'informations permettant à un ordinateur de fonctionner comme :
une unité d'identification de type (11c) configurée pour identifier un type de déchet accumulé dans une fosse à déchets ou à un emplacement d'accumulation de déchets et un type d'une cible d'identification autre que les déchets lorsque de nouvelles données d'image d'un intérieur de la fosse à déchets ou de l'emplacement d'accumulation de déchets, respectivement, sont fournies en tant qu'entrée en utilisant un algorithme d'identification (12a) qui a été éduqué avec des données d'apprentissage préparées en étiquetant un type de déchet et en étiquetant la cible d'identification autre que les déchets par type de la cible sur des données d'images antérieures obtenues en capturant l'intérieur de la fosse à déchets ou de l'emplacement d'accumulation de déchets, respectivement, où sont accumulés les déchets.

13. Procédé de traitement d'informations exécuté par un ordinateur, le procédé comprenant :
l'identification d'un type de déchet accumulé dans une fosse à déchets ou à un emplacement d'accumulation de déchets et un type d'une cible d'identification autre que les déchets lorsque de nouvelles données d'image d'un intérieur de la fosse à déchets ou de l'emplacement d'accumulation de déchets, respectivement, sont fournies en tant qu'entrée en utilisant un algorithme d'identification (12a) qui a été éduqué avec des données d'apprentissage préparées en étiquetant un type de déchet et en étiquetant la cible d'identification autre que les déchets par type de la cible sur des données d'images antérieures obtenues en capturant l'intérieur de la fosse à déchets ou de l'emplacement d'accumulation de déchets, respectivement, où sont accumulés les déchets.

14. Dispositif de traitement d'informations selon l'une quelconque des revendications 1 à 11, comprenant en outre :
une unité de génération d'algorithme d'identification (11a) configurée pour générer l'algorithme d'identification (12a) en apprenant des données d'apprentissage préparées en étiquetant le type de déchet sur des données d'image antérieures obtenues en capturant un intérieur de la fosse à déchets où sont accumulés les déchets.
